# EUROPÄISCHE PATENTSCHRIFT

(11) **EP 1 077 220 B1**
(45) Veröffentlichungstag und Bekanntmachung des Hinweises auf die Patenterteilung: **05.11.2003**
(21) Anmeldenummer: 00116159.5
(22) Anmeldetag: 01.08.2000
(51) Int. Cl.: C08B 3/00, C08B 11/00

(54) **Verfahren zur Herstellung von Cellulosederivaten**
Process for the manufacture of cellulose derivatives
Procede pour la fabrication de derives de cellulose

(30) Priorität: 13.08.1999 DE 19938502
(43) Veröffentlichungstag der Anmeldung: 21.02.2001
(73) Patentinhaber: Wolff Walsrode AG, 29655 Walsrode (DE); Friedrich-Schiller-Universität Jena, 07743 Jena (DE)
(72) Erfinder: Thielking, Heiko, Dr., 29683 Fallingbostel (DE); Koch, Wolfgang, Dr., 29699 Bomlitz (DE); Nachtkamp, Klaus, Dr., 29664 Walsrode (DE); Ondruschka, Bernd, Prof. Dr., 04109 Leipzig (DE); Nüchter, Matthias, Dr., 04347 Leipzig (DE); Klemm, Dieter, Prof. Dr., 99724 Weimar (DE)
(74) Vertreter: Feldhues, Michael L.F., Dr.

(56) Entgegenhaltungen:
- WO-A-00/50492
- WO-A-98/01497
- DE-A- 19 624 990
- US-A- 4 248 595
- US-A- 4 576 609
- DATABASE WPI Week 198327 Derwent Publications Ltd., London, GB; AN 1983-701918 XP002154753 & JP 58 087372 A (TOPPAN PRINTING CO., LTD), 25. Mai 1983 (1983-05-25)

## Beschreibung

Die Erfindung betrifft ein Verfahren zur Herstellung von Cellulosederivaten, wobei die Reaktion in diskontinuierlicher oder kontinuierlicher Reaktionsführung unter Einwirkung eines Hochfrequenzfeldes durchgeführt wird.

Veredlungsprodukte der Cellulose sind vielseitig eingesetzte Substanzen aus nachwachsenden Rohstoffen, welche auf Grund ihrer Eigenschaften zunehmend in verschiedenen Bereichen genutzt werden. So spielen Cellulosederivate als Zwischenprodukte und Hilfsmittel in der Biotechnologie, der Pharmazie, der Bau-, Papier- und Lebensmittelindustrie, der Kosmetik, der Medizintechnik und der Chromatographie eine zunehmend wachsende Rolle.

Üblicherweise werden die hier diskutierten Cellulosederivate durch Erwärmen einer voraktivierten Cellulose mit den benötigten Reagenzien (z.B. Chloressigsäure oder deren Natriumsalz, Methyl- oder Propylchlorid, Vinylsulfonsäure oder Chlorethansulfonsäure) in Gegenwart von wäßriger Lauge und einem geeigneten Slurrymedium (z.B. einem niederen Alkohol) hergestellt. Eine Übersicht über die existierenden Verfahren findet sich z.B. in "Comprehensive Cellulose Chemistry", D. Klemm, B. Philipp, Th. Heinze, U. Heinze, W. Wagenknecht, Wiley-VCH, Weinheim, 1998. Nicht alle der hier angeführten Verfahren besitzen eine wirtschaftliche Bedeutung.

Bei der Veretherung von Cellulose entsteht bei Temperaturen von 50°C bis 150°C und langen Reaktionszeiten (1 - 10 h) Gemische mit unterschiedlichen Substitutionsgraden an den einzelnen Glucosebausteinen (nachfolgend AGU = Anhydroglucoseeinheit genannt).

Die diskontinuierlichen Prozesse erfordern neben einem relativ großen Energiebedarf einen hohen verfahrenstechnischen sowie zeitlichen Aufwand. Durch die langen Reaktionszeiten sind die Reaktion und das Reaktionsprodukt kaum beeinflußbar und es wird die Bildung von Nebenprodukten gefördert, wodurch zusätzliche Reinigungsschritte notwendig werden, die den Verfahrensaufwand weiter erhöhen.

Der Erfindung lag die Aufgabe zu Grunde, ein Verfahren zur Herstellung von Cellulosederivaten zu schaffen, mit dem die Reaktion zwecks einflußnahme auf die Reaktionsprodukte beeinflußt werden kann und bei welchem der Verfahrensaufwand verringert wird.

Gegenstand der Erfindung ist daher ein Verfahren zur Herstellung von Cellulosederivaten, bei dem
a) Cellulose durch Vermischen mit 10 bis 70% iger wässriger Natronlauge oder festem Natriumhydroxid aktiviert und
b) mit einem oder mehreren Reagenzien, gegebenenfalls in Gegenwart eines Suspensionsmittels bei einer Temperatur von 20 bis 150°C umgesetzt wird,
dadurch gekennzeichnet, daß Reaktionsschritt b) in einem elektromagnetischen Feld mit einer Frequenz im Bereich von 10 MHz bis 23 GHz durchgeführt wird.

Erfindungsgemäß wurde gefunden, daß sich Cellulose unter dem Einfluß des Hochfrequenzfeldes in kurzer Zeit zu Cellulosederivaten mit unterschiedlichen Substituenten und unterschiedlichen DS-Werten umsetzen läßt.

Es ist überraschend, daß sich Cellulose unter dem Einfluß dieses Hochfrequenzfeldes in wesentlich kürzerer Zeit zu Cellulosederivaten mit unterschiedlichen Substituenten sowie unterschiedlichen DS-Werten umsetzen läßt, ohne daß das Reaktionsprodukt durch die elektromegnetische Strahlung im angegebenen Frequenzbereich abgebaut wird, d.h. ohne daß eine Depolymerisation der Cellulose nachweisbar ist. Vielmehr können durch Wahl des sehr effizienten Energieeintrages, der den energiebedarf drastisch reduziert, und durch geeignete Auswahl der Reaktionsbedingungen, wie beispielsweise Größe dieses Energieeintrges, Druck und Reaktionstemperatur, die DS-Werte und die Substituenten der Cellulosederivate beeinflußt und somit variiert werden.

Die Reaktion kann so durchgeführt werden, daß das Reaktionsgemisch in der Apparatur drucklos oder unter Druck bei Kontrolle von Energieeintrag, Druck und Temperatur der Hochfrequenzstrahlung ausgesetzt wird.

Bei der Durchführung des erfindungsgemäßen Verfahrens ergaben sich unerwartet kurze Reaktionszeiten und dadurch Reaktionsprodukte mit geringem anfall an unerwünschten Nebenprodukten, so daß die bereits unmittelbar im Herstellungsprozeß mit erforderlicher Reinheit entstehenden Cellulosederivate nicht oder für den Verfahrensaufwand nur unwesentlich nachfolgenden Reinigungsschritten unterzogen werden.

Dabei kann sowohl im Batchverfahren als auch kontinuierlich gearbeitet werden.

Die Aktivierung erfolgt durch das Vermischen mit 10 bis 70 %ige wäßriger Natronlauge, bevorzugt 50 %ige wäßriger Natronlauge oder festem Natriumhydroxid in Reaktionsschritt a). Die Alkalisierung wird üblicherweise für 1 bis 150 Minuten, insbesondere für 100 Minuten durchgeführt.

Reaktionsschritt b) wird bei erhöhter Temperatur von 20 bis 150°C, insbesondere 50 bis 100°C, durchgeführt. Als Reagenzien werden üblicherweise Veretherungsreagenzien eingesetzt.

Erfindungsgemäß wird ein elektromagnetisches Hochfrequenzfeld mit einer Frequenz im Bereich von 10 MHz bis 23 GHz, vorzugsweise 2 bis 3 GHz, insbesondere 2,45 GHz für die Induktion des Reaktionsschrittes b) eingesetzt. Die Bestrahlungsdauer liegt üblicherweise im Bereich von einer bis 120 insbesondere bei einer bis 60 Minuten.

Erzeugt werden kann das elektromagnetische Feld in an sich bekannter Weise durch ein Magnetron. Es kann ein kommerziell erhältlicher Mikrowellen-Ofen bei der Durchführung im Batch-Verfahren eingesetzt werden.

Bei kontinuierlicher Verfahrensführung ist es u.a. auch möglich, einen Durchflußreaktor (z.B. Cont Flow®, MLS Lautkirch) dem Einfluß des elektromagnetischen Feldes auszusetzen.

Geeignet ist das Verfahren für die Synthese von nichtionischen, kationischen als auch anionischen Cellulosederivaten wie Celluloseether, Celluloseester und Celluloseetherester. Geeignete Celluloseether sind Carboxymethylcellulose (CMC) oder Alkylcellulosen, z.B. Methylcellulose (MC) oder Ethylcellulose (EC), Hydroxyalkylcellulosen, z.B. Hydroxyethylcellulose (HEC) oder Hydroxypropylcellulose (HPC) oder deren Mischether wie Alkylhydroxyalkylcelluloseether, z.B. Methylhydroxyethylcellulose oder Methylhydroxypropylcellulose (MHPC), Buthylhydroxyethylcellulose (BHEC), Ethylhydroxyethylcellulose (EHEC), Methylhydroxybuthylcellulose (MHBC), Alkylhydroxyalkylhydroxyalkylcelluloseether, z.B. Methylhydroxyethylhydroxypropylcellulose (MHEHPC), Alkylcarboxyalkylcellulosether, z.B. Methylcarboxymethylcellulose (MCMC), Alkylhydroxyalkylcarboxyalkylcelluloseether, z.B. Methylhydroxyethylcarboxymethylcellulose (MHECMC) oder Methylhydroxypropylcarboxymethylcellulose (MHPCMC), Alkylhydroxyalkylhydroyalkylcarboxyalkylcelluloseether, z.B. Methylhydroxyethylhydroxypropylcarboxymethylcellulose (MHEHPCMC), oder die jeweiligen sulfoalkylgruppenhaltigen Derivate der genannten Verbindungen, z.B. Sulfoethylcellulose (SEC), Methylsulfoethylcellulose (MSEC), Ethylsulfoethylcellulose (ESEC), Hydroxyethylsulfoethylcellulose (HESEC), Hydroxypropylsulfoethylcellulose (HPSEC) oder entsprechende Mischformen wie z.B. Carboxymethylsulfoethylcellulose (CMSEC) oder Methylcarboxymethylsulfoethylcellulose (MCMSEC). Auch ist das Verfahren geeignet zur Herstellung hydrophob modifizierter Formen der oben aufgezählten Celluloseether, wie Hexadecylcarboxymethylcellulose oder

Hexadecylhydroxyethylcellulose oder für Celluloseester wie Celluloseacetat (CA), Celluloselactat (CL), Cellulosebutyrat (CB), Celluloseacetobutyrat (CAB), Cellulosecapronate (CCP). Als Celluloseetherester sind quasi alle Mischformen denkbar, z.B. Hydroxypropylcelluloselactat (HPLC).

Die folgenden Beispiele sollen den Gegenstand der Erfindung näher erläutern.

### Beispiele

### Beispiel 1

Eine Suspension von 1 g Fichtensulfitzellstoff in 30 ml Isopropanol wird unter Rühren mit wäßriger Natronlauge voraktiviert. Man mischt eine Stunde bei Raumtemperatur und gibt dann das Carboxymethylierungsreagenz zu. Die Reaktionsmischung wird in einem Druckbehälter mit 500 W Leistung (2,45 GHz) unter den angegebenen Bedingungen unter Rühren bestrahlt. Das Reaktionsgemisch wird nach den üblichen Methoden zur Gewinnung von Carboxymethylcellulose aufgearbeitet. In Tabelle 1 sind einige Beispiele für Reaktionen unter unterschiedlichen Bedingungen aufgeführt.

**Tabelle 1:**

| Synthese von CMC im Hochfrequenzfeld unter unterschiedlichen Bedingungen | | | | |
|---|---|---|---|---|
| Molares Verhältnis AGU^{a)}:CMR^{b)}:NaOH | Temperatur [°C] | Zeit [min] | DS^{c)} | Viskosität^{f)}[mPas] |
| 1 : 2^{d)} : 2 | 70 | 30 | 1,2 | 1580 |
| 1 : 3^{d)} : 2 | 70 | 60 | 1,3 | 456 |
| 1 : 2^{e)} : 4 | 70 | 30 | 0,85 | 164 |

| | | | | |
|---|---|---|---|---|
| ^{a)} AGU = Anhydroglucoseeinheit | | | | |
| ^{b)} CMR = Carboxymethylierungsreagenz | | | | |
| ^{c)} DS = Substitutionsgrad | | | | |
| ^{d)} Chloressigsäure-Natriumsalz | | | | |
| ^{e)} Chloressigsäure | | | | |
| ^{f)} Viskosität einer 2 %igen wäßrigen Lösung, D = 2,55 s⁻¹ | | | | |

### Beispiel 2

Eine Mischung aus 15 g Fichtensulfitzellstoff und 400 ml Isopropanol wird eine Stunde mit 40 ml 15 %iger wäßriger Natronlauge voraktiviert. Man gibt 18 g Monochloressigsäure-Natriumsalz zu und bestrahlt die Reaktionsmischung in einem Druckbehälter für 20 min mit 500 W Leistung (2,45 GHz) bei max. 55°C. Nach Abkühlen und Aufarbeitung erhält man Carboxymethylcellulose mit einem DS von 1,1.

### Beispiel 3

Eine Suspension von 1 g Fichtensulfitzellstoff in 30 ml Isopropanol wird unter Rühren mit 2,66 ml 15 %iger wäßriger Natronlauge voraktiviert. Man mischt eine Stunde bei Raumtemperatur und gibt dann 1,2 g Monochloressigsäure-Natriumsalz zu. Die Mischung wird in einem Reaktor mit 500 W Leistung bei max. 70°C unter Rühren mit einer Frequenz von 13,65 MHz bestrahlt. Das Reaktionsgemisch wird nach den üblichen Methoden zur Gewinnung von Carboxymethylcellulose aufgearbeitet. DS = 1,2.

### Beispiel 4

Eine Suspension von 1 g Carboxymethylcellulose (DS = 1,3) in 30 ml Isopropanol wird unter Rühren mit 2,66 ml 15 %iger wäßriger Natronlauge voraktiviert. Man mischt eine Stunde bei Raumtemperatur und gibt dann 1,2 g Monochloressigsäure-Natriumsalz zu. Die Mischung wird in einem Reaktor mit 500 W Leistung bei max. 70°C unter Rühren mit einer Frequenz von 2,45 GHz bestrahlt. Das Reaktionsgemisch wird nach den üblichen Methoden zur Gewinnung von Carboxymethylcellulose aufgearbeitet. DS = 2,1.

### Beispiel 5

Durch einen Durchflußreaktor wird bei einer Maximaltemperatur von 100°C, einem Druck von 20 bar, einer Leistung von *350* W (2,45 GHz) und einer mittleren Verweilzeit von etwa 10 min ein voraktiviertes Gemisch aus 100 g Perlcellulose, 3000 ml Isopropanol, 270 ml 15 %iger wäßriger Natronlauge und 120 g Monochloressigsäure-Natriumsalz gepumpt. Die Reaktionslösung wird am Reaktorende abgeschreckt, auf Raumtemperatur gekühlt und wie üblich aufgearbeitet. Der Umsatz ist quantitativ. Die entstandene Carboxymethylcellulose hat einen DS von 1,3.

### Beispiel 6

Zu einer Suspension aus 10 g Fichtensulfitzellstoff in 174 ml Isopropanol und 26 ml Wasser werden 5,2 g Natriumhydroxid gegeben und das Gemisch 30 min bei Raumtemperatur gerührt. Man gibt 9,9 g Monochloressigsäure zu und bestrahlt die Reaktionsmischung 20 min mit 500 W Leistung (2,45 GHz) bei 55 °C. Nach Abkühlen und üblicher Aufarbeitung erhält man Carboxymethylcellulose mit einem DS von 0,64 und einer Viskosität von η_{2,55 s}-1 = 1880 [mPas].

### Beispiel 7

Zu einer Suspension aus 1 g Zellstoff in 16 g Isopropanol, 1 g Methanol und 1,7 g Wasser werden 0,6 g feste Natronlauge gegeben und 80 min bei Raumtemperatur alkalisiert. Nach der Zugabe von 0,8 g 75 %iger Chloressigsäure wurde ca. eine Minute homogenisiert und anschließend vier - acht Minuten bei 240 - 500 Watt Leistung in einer haushaltsüblichen Mikrowelle umgesetzt. Nach üblicher Aufarbeitung wurden die in Tabelle 2 dargestellten Produkte erhalten:

**Tabelle 2:**

| Synthese von CMC im Hochfrequenzfeld unter unterschiedlichen Bedingungen | | | |
|---|---|---|---|
| Veretherungszeit [min] | Leistung [Watt] | DS^{a)} [-] | Viskosität^{b)} [mPas] |
| 4 | 500 | 0,53 | 1730 |
| 8 | 240 | 0,73 | 3066 |
| 2x4 | 500 | 0,71 | 1406 |

| | | | |
|---|---|---|---|
| ^{a)} DS = Substitutionsgrad | | | |
| ^{b)} Viskosität einer 2%igen wäßrigen Lösung, D = 2,55 s⁻¹ | | | |

### Beispiel 8

Zu einer Suspension aus 1 g Zellstoff in 17 g Isopropanol und Wasser werden 0,5 g feste Natronlauge und entsprechende Mengen an Vinylsulfonsäure (VSSNa, 30 %ig) gegeben und 80 min bei Raumtemperatur alkalisiert. Anschließend wird ca. eine Minute homogenisiert und acht Minuten bei 240 Watt Leistung in einer haushaltsüblichen Mikrowelle umgesetzt. Nach üblicher Aufarbeitung wurden die in Tabelle 3 dargestellten Produkte erhalten:

**Tabelle 3:**

| Synthese von SEC im Hochfrequenzfeld unter unterschiedlichen Bedingungen | | | |
|---|---|---|---|
| VSSNa [g] | Wasser [g] | DS^{a)} [-] | Viskosität^{b)} [mPas] |
| 1,1 | 0,81 | 0,21 | 2108 |
| 1,6 | 0,48 | 0,25 | 555 |
| 2,2 | 0,14 | 0,32 | 497 |

| | | | |
|---|---|---|---|
| ^{a)} DS = Substitutionsgrad | | | |
| ^{b)} Viskosität einer 2%igen wäßrigen Lösung, D = 2,55 s⁻¹ | | | |

### Beispiel 9

Zu einer Suspension aus 8,7 g Cellulose in 131 g Isopropanol und 4,5 g Wasser werden 4,8 g Natriumhydroxid und 12,7 g Vinylsulfonsäure-Natriumsalz (30 %ige Lösung in Wasser) gegeben. Nach Inertisierung wird das Gemisch 90 min bei Raumtemperatur gerührt. Anschließend wird die Reaktionsmischung auf 80°C mit Mikrowellenenergie (2,45 GHz) erwärmt und bei 80°C ca. 10 min verethert. Nach Abkühlen auf 50°C werden 5,9 g Chloressigsäure (80 %ige Lösung in Wasser) zugegeben und die Reaktionsmischung noch einmal auf 87°C erwärmt und 10 min gerührt. Nach üblicher Aufarbeitung (Abkühlung, Neutralisation und Reinigung mit wässrigem Methanol) wird carboxymethylsulfoethylcellulose mit einem DS(CM) = 0,56, einem DS(SE) = 0,25 und einer Viskosität von V₁ = 1480 mPas (gemessen bei D = 2,55 s⁻¹) erhalten.

### Beispiel 10 (HESEC aus SEC)

Zu einer Suspension aus 30,8 g Sulfoethylcellulose (DS(SE) = 0,23) in 350 g tert.-Butanol und 36 ml Wasser werden 3 g Natriumhydroxid gegeben. Nach Inertisierung wird das Gemisch 30 min bei Raumtemperatur gerührt. Nach Zugabe von 26,4 g Ethylenoxid wird die Reaktionsmischung auf 80 bis 90°C mit Mikrowellenenergie (2,45 GHz, 500 W) erhitzt und bei 80°C ca. 20 min verethert. Nach Abkühlen und üblicher Aufarbeitung erhält man Hydroxyethylsulfoethylcellulose mit einem DS(SE) = 0,23, einem MS(HE) = 0,75 und einer Viskosität von V₂ = 1003 mPas (gemessen bei D = 2,55 s⁻¹).

### Beispiel 11 (HEC)

Zu einer Suspension aus 26 g Cellulose in 253 ml tert.-Butanol und 36 ml Wasser werden 9 g Natriumhydroxid gegeben. Nach Inertisierung wird das Gemisch 20 min bei Raumtemperatur gerührt. Nach Zugabe von 40 g Ethylenoxid wird die Reaktionsmischung auf 110°C mit Mikrowellenenergie (2,45 GHz, 500 W) erhitzt und bei 100°C ca. 25 min verethert. Nach Abkühlen, Neutralisieren und üblicher Aufarbeitung erhält man Hydroxyethylcellulose mit einem MS(HE) = 3,23 und einer Viskosität von V₂ = 1032 mPas (gemessen bei D = 2,55 s⁻¹).

### Beispiel 12 (HEC)

Zu einer Suspension aus 26 g Cellulose in 350 ml tert.-Butanol und 36 ml Wasser werden 9 g Natriumhydroxid gegeben. Nach Inertisierung wird das Gemisch 20 min bei Raumtemperatur gerührt. Nach Zugabe von 40 g Ethylenoxid wird die Reaktionsmichung auf 100°C mit Mikrowellenenergie (2,45 GHz, 500 W) erhitzt und bei 100°C ca. 20 min verethert. Nach Abkühlen, Neutralisieren und üblicher Aufarbeitung erhält man Hydroxyethylcellulose mit einem MS(HE) = 2,93 und einer Viskosität von V₂ = 1133 mPas (gemessen bei D = 2,55 s⁻¹).

### Beispiel 13 (SEC)

Zu einer Suspension aus 17,3 g Cellulose in 335 ml Isopropanol und 3,35 ml Wasser werden 6 g Natriumhydroxid und 26,2 g Vinylsulfonsäure-Natriumsalz (30 %ige Lösung in Wasser) gegeben. Nach Inertisierung wird das Gemisch 75 min bei Raumtemperatur gerührt. Anschließend wird die Reaktionsmischung auf 80°C mit Mikrowellenenergie (2,45 GHz) erwärmt und bei 80°C ca. 10 min verethert. Nach Abkühlen und üblicher Aufarbeitung (Neutralisation und Reinigung mit wässrigem Methanol) wird Sulfoethylcellulose mit einem DS(SE) = 0,32 und einer Viskosität von V₁ = 576 mPas (gemessen bei D = 2,55 s⁻¹) erhalten.

## Patentansprüche

1. Verfahren zur Herstellung von Cellulosederivaten, bei dem
a) Cellulose durch Vermischen mit 10 bis 70%iger wässriger Natronlauge oder festem Natriumhydroxid aktiviert und
b) mit einem oder mehreren Reagenzien gegebenenfalls in Gegenwart eines Suspensionsmittels bei einer Temperatur von 20 bis 150°C umgesetzt wird,
**dadurch gekennzeichnet, dass** Reaktionsschritt b) in einem elektromagnetischen Feld mit einer Frequenz im Bereich von 10 MHz bis 23 GHz durchgeführt wird.

2. Verfahren nach Anspruch 1, **dadurch gekennzeichnet, dass** Reaktionsschritt b) in einem elektromagnetischen Feld mit einer Frequenz von 2 und 3 GHz durchgeführt wird.

3. Verfahren nach einem der Ansprüche 1 bis 2, **dadurch gekennzeichnet, dass** Reaktionsschritt b) für eine Reaktionsdauer von 1 bis 120 Minuten im elektromagnetischen Feld durchgeführt wird.

4. Verfahren nach einem der Ansprüche 1 bis 3, **dadurch gekennzeichnet, dass** das Verfahren diskontinuierlich durchgeführt wird.

5. Verfahren nach einem der Ansprüche 1 bis 3, **dadurch gekennzeichnet, dass** das Verfahren kontinuierlich durchgeführt wird.

6. Verfahren nach einem der Ansprüche 1 bis 5, **dadurch gekennzeichnet, dass** die Cellulosederivate nach Reaktionsschritt b) isoliert und von den entstandenen Salzen und Nebenprodukten befreit werden.

## Claims

1. Process for preparing cellulose derivatives, in which
a) cellulose is activated by mixing with 10 - 70% strength aqueous sodium hydroxide solution or solid sodium hydroxide and
b) reacted with one or more reagents in the presence or absence of a suspension medium at a temperature of from 20 to 150°C,
**characterized in that** reaction step b) is carried out in an electromagnetic field having a frequency in the range from 10 MHz to 23 GHz.

2. Process according to Claim 1, **characterized in that** reaction step b) is carried out in an electromagnetic field having a frequency of from 2 to 3 GHz.

3. Process according to Claim 1 or 2, **characterized in that** reaction step b) is carried out for a reaction time of from 1 to 120 minutes in the electromagnetic field.

4. Process according to any of Claims 1 to 3, **characterized in that** the process is carried out batchwise.

5. Process according to any of Claims 1 to 3, **characterized in that** the process is carried out continuously.

6. Process according to any of Claims 1 to 5, **characterized in that** the cellulose derivatives are isolated and freed of the salts and by-products formed after reaction step b).

## Revendications

1. Procédé de préparation de dérivés de cellulose selon lequel
c) on active la cellulose par mélange avec une lessive de soude aqueuse à 10 à 70 % et
d) on fait réagir avec un ou plusieurs réactifs éventuellement en présence d'un agent de mise en suspension à une température de 20 à 150°C,
**caractérisé en ce qu'**on effectue l'étape réactionnelle b) dans un champ électromagnétique avec une fréquence dans la plage de 10 MHz à 23 GHz.

2. Procédé selon la revendication 1, **caractérisé en ce qu'**on effectue l'étape rationnelle b) dans un champ électromagnétique avec une fréquence de 2 et 3 Ghz.

3. Procédé selon l'une des revendications 1 à 2, **caractérisé en ce qu'**on effectue l'étape réactionnelle b) pour une durée réactionnelle de 1 à 120 minutes dans le champ électromagnétique.

4. Procédé selon l'une des revendications 1 à 3, **caractérisé en ce qu'**on effectue le procédé en discontinu.

5. Procédé selon l'une des revendications 1 à 3, **caractérisé en ce qu'**on effectue le procédé en continu.

6. Procédé selon l'une des revendications 1 à 5, **caractérisé en ce qu'**on isole les dérivés de cellulose après l'étape réactionnelle b) et qu'on élimine les sels et les produits secondaires formés.
